# EUROPÄISCHE PATENTSCHRIFT

(11) **EP 1 777 251 B1**
(45) Veröffentlichungstag und Bekanntmachung des Hinweises auf die Patenterteilung: **14.03.2012**
(21) Anmeldenummer: 06021186.9
(22) Anmeldetag: 10.10.2006
(51) Int. Cl.: C08J 7/04, C09D 167/00

(54) **Polyesterfolie mit hydrophiler Beschichtung**
Polyester film having a hydrophilic coating
Film de polyester comportant un revêtement hydrophile

(30) Priorität: 18.10.2005 DE 102005049639
(43) Veröffentlichungstag der Anmeldung: 25.04.2007
(73) Patentinhaber: Mitsubishi Polyester Film GmbH, 65203 Wiesbaden (DE)
(72) Erfinder: Konrad, Matthias Dr., 65719 Hofheim (DE); Peiffer, Herbert Dr. Prof., 55126 Mainz (DE); Hilkert, Gottfried Dr., 55291 Saulheim (DE)
(74) Vertreter: Schweitzer, Klaus

(56) Entgegenhaltungen:
- DE-A1- 10 035 328
- US-A- 5 958 552
- US-A- 6 060 156
- US-A1- 2003 207 987

## Beschreibung

Die Erfindung betrifft eine biaxial orientierte Polyesterfolie mit hydrophiler Beschichtung, die einen Sulfopolyester, ein anionisches Tensid und optional ein haftvermittelndes Polymer enthält wobei die Beschicthtung eine Dicke von 5 bis 200 nm hat. Die Beschichtung wird bevorzugt in-line, d. h. bei der Folienherstellung, aufgebracht. Die beschichtete Folie zeichnet sich durch eine charakteristische hydrophile Oberfläche aus, die das Beschlagen der Folie mit Wassertröpfchen verhindert (sog. Anti-Fog-Beschichtung).

Die Verpackungsindustrie hat einen hohen Bedarf an transparenten biaxial orientierten Polyesterfolien. Werden frische, leichtverderbliche Lebensmittel mit Polyesterfolie verpackt, kann es, besonders bei gekühlten Waren, zum unerwünschten Beschlagen der Folie und somit zur Verschlechterung der Transparenz kommen, wenn Feuchtigkeit aus dem verpackten Gut an der Folie in Form von meist unterschiedlich großen Tropfen kondensiert. Dabei wird die Transparenz der Folie durch das Kondensat deutlich verschlechtert. Die Verminderung der Transparenz der Folie kann durch eine hydrophile Beschichtung, auch Antibeschlag-Beschichtung oder Anti-Fog-Beschichtung genannt, verhindert werden.

Antibeschlag-Eigenschaften von Kunststoffoberflächen können mittels zweier verschiedener Technologien realisiert werden. Zum einen ist die Zugabe eines Additivs in das Polymer denkbar, zum anderen kann eine Antibeschlag-Beschichtung auf die Folie aufgetragen werden. Die Zugabe eines Additivs in das Polymer ist bei Polyolefinartikeln, insbesondere Folien, möglich (z. B. WO 2002/074535). Die Antibeschlag-Wirkung auf der Folienoberfläche beruht auf der Migration des Additivs, meist ein amphiphiles Molekül, an die Oberfläche, so dass die polaren Enden der Moleküle die eigentliche Antibeschlag-Schicht bilden. Eine Übertragung dieses Prinzips auf eine Polyesterfolie ist aufgrund der hohen Polarität des Polyesters nicht möglich.

In der EP 322 529 wird eine Copolyesterbeschichtung u. a. für Polyester beschrieben, die bis zu 95 % Isophthalsäure und 5 bis 35 % eines Monomeren mit Alkalisulfonatgruppe enthält. Die Beschichtung wird als Haftvermittler gegenüber aufgedampften Metallen eingesetzt. Zur Oberflächenspannung der beschichteten Folie bzw. zum Verhalten gegenüber Kondenswasser wird keine Aussage getroffen.

Die EP 1 358 896 beschreibt eine Beschichtung für eine Nadel, die einen sulfonierten Polyester und ein Tensid enthält. Diese beiden Komponenten werden in den Beispielen im Verhältnis von ca. 10:1 gemischt und mittels eines Tauchverfahrens auf das Substrat aufgebracht. Die Kontaktwinkel der beschichteten Substrate gegenüber Wasser sind kleiner 10°, d. h. die Oberflächenspannung ist größer 70 mN/m. Über die Dicke der Beschichtung wird keine Aussage getroffen.

In der DE-A-10 2004 049 609 wird eine Beschichtung beschrieben, die Polyvinylpyrrolidon, ein Tensid und optional ein haftvermittelndes Polymer enthält. Diese Zusammensetzung eignet sich zur In-line-Beschichtung von biaxial orientierten Polyesterfolien. Die so erhaltenen, beschichteten Folien zeichnen sich durch eine charakteristische hydrophile Oberfläche aus, die das Beschlagen der Folie mit Wassertröpfchen verhindert. Verbesserungswürdig ist die optische Qualität der beschichteten Folie. Die Beschichtung erhöht die Trübung der Folie, was besonders bei hoch transparenten Folien unerwünscht ist.

Aufgabe der vorliegenden Erfindung war es, eine hydrophil beschichtete, biaxial orientierte Polyesterfolie bereitzustellen, bei der die Beschichtung bevorzugt in-line während der Herstellung der Polyesterfolie, d. h. bevorzugt vor dem zweiten Streckschritt, aufgetragen wird. Die so erhaltene beschichtete Polyesterfolie sollte eine hohe Hydrophilie und einen guten Antibeschlageffekt haben.

Die Aufgabe wird erfindungsgemäß gelöst durch die Bereitstellung einer beschichteten Polyesterfolie, die unter Verwendung einer Beschichtungszusammensetzung hergestellt wird, die neben Wasser die folgenden Komponenten enthält:
a) einen Sulfopolyester,
b) ein anionisches Tensid und optional
c) ein Polymer, das die Anbindung der anderen Komponenten an die Polyesteroberfläche verbessert (haftvermittelndes Polymer).

Die Gesamtkonzentration aller Komponenten a) bis c) in Wasser liegt bevorzugt im Bereich von 1 bis 8 Gew.-%. Sofern nichts anderes gesagt ist, handelt es sich bei allen Mengenangaben um Gewichtsprozent.

Der Sulfopolyester besteht aus dem Kondensationsprodukt der folgenden Monomeren bzw. deren zur Bildung von Polyestern befähigten Derivaten:
A) bis zu 95 Mol-% Isophthalsäure,
B) 5 bis 20 Mol-% wenigstens eines Sulfomonomeren enthaltend eine Alkalimetallsulfonatgruppe an dem aromatischen Teil einer aromatischen Dicarbonsäure und
C) die zur Bildung von 100 Mol-% Kondensat notwendige stöchiometrische Menge wenigstens eines copolymerisierbaren aliphatischen oder cycloaliphatischen Glykols mit 2 bis 11 Kohlenstoffatomen,
wobei die Prozentangaben jeweils bezogen sind auf die Gesamtmenge der den Sulfopolyester bildenden Monomeren.

Die Konzentration des Sulfopolyesters in der fertigen Beschichtungsmischung oder -dispersion beträgt bevorzugt 0,1 bis 2,5 Gew.-%, insbesondere 0,3 bis 2 Gew.-%.

Beispiele für Sulfomonomere, die eine Metallsulfonatgruppe an dem aromatischen Teil einer aromatischen Dicarbonsäure (Komponente B) enthalten, sind solche Monomere, die der folgenden allgemeinen Formel entsprechen:

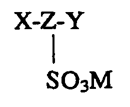

In dieser Formel ist:
M ein einwertiges Kation eines Alkalimetalls,
Z ein dreiwertiger aromatischer Rest, und
X und Y sind Carboxylgruppen oder zur Bildung von Polyestern befähigte Derivate.

Monomere dieser Art sind in US 3,563,942 und 3,779,993 beschrieben. Beispiele solcher Monomere sind Natriumsulfoterephthalsäure, Natrium-5-sulfoisophthalsäure, Natriumsulfophthalsäure, 5-(p-Natriumsulfophenoxy)-isophthalsäure, 5-(Natrium-sulfopropoxy)-isophthalsäure und dergleichen Monomere sowie deren zur Bildung von Polyestern befähigten Derivate wie z. B. die Dimethylester. M ist vorzugsweise Na, Li oder K als Kation. Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu diesen Gruppen zählen Carboxylgruppen sowie deren niedere Alkylester, z. B. Dimethylterephthalat, Diethylterephthalat und zahlreiche andere entsprechende Ester, Halogenide oder Salze. Bevorzugt werden die Säuremonomeren als Dimethylester verwendet, da auf diese Weise die Kondensationsreaktion besser gesteuert werden kann.

Als Komponente C geeignete Glykole sind z. B. Ethylenglykol, 2-Methyl-1,3-Propandiol, 1,5-Pentandiol, 1,6-Hexandiol, Neopentylglykol, 1,10-Decandiol, Cycolhexan-dimethanol und ähnliche Substanzen. Bevorzugt wird Ethylenglykol und 2-Methyl-1,3-Propandiol verwendet.

Die Copolyester können durch bekannte Polymerisationstechniken hergestellt werden. Im allgemeinen wird so verfahren, dass die Säurekomponenten mit Glykol zusammengebracht und in Anwesenheit eines Veresterungskatalysators erhitzt werden, mit anschließender Zugabe eines Polykondensationskatalysators.

Das die Komponente B bildende Monomere sollte in einer Menge von wenigstens 5 Mol-% in diesem System enthalten sein, damit die Grundierung mit Wasser dispergierbar wird. Bevorzugt liegt die Menge an Monomeren der Komponente B bei etwa 6,5 bis 15 Mol-%. Die Glykolkomponente ist in ungefähr stöchiometrischer Menge anwesend.

Die für die Zwecke dieser Erfindung geeigneten Sulfopolyester zeichnen sich weiterhin dadurch aus, dass sie eine Säurezahl unter 10, vorzugsweise von 0 bis 3, ein mittleres MolGewicht unter etwa 50.000 und einen RV-Wert (relative Viskosität, gemessen mit einem Kapillarviskosimeter nach Ubbelohde an einer 1%-igen Lösung in Dichloressigsäure bei 25 °C) im Bereich von etwa 30 bis 700, vorzugsweise etwa 350 bis 650, aufweisen.

Unter Tensiden versteht man Moleküle, die aus einem hydrophoben und einem hydrophilen Teil bestehen, man sagt, sie sind amphiphil.

Das in der oben beschriebenen Beschichtungszusammensetzung genannte anionische Tensid wird in einer Konzentration von bevorzugt 0,1 bis 2,5 Gew.-%, insbesondere von 0,3 bis 2 Gew.-%, verwendet und ist bevorzugt ein ionisches, besonders bevorzugt ein anionisches Tensid und wird besonders bevorzugt aus der Gruppe der Alkylsulfate, Alkylbenzolsulfate, Alkylethersulfate oder Sulfobernsteinsäureester gewählt. Beispiele für solche Tenside sind Natriumlaurylsulfat, Natriumdodecylbenzolsulfonat und Natriumdioctylsulfosuccinat. Gew.-% ist bezogen auf die fertige Beschichtungsmischung.

Die Polymere, die die Anbindung der zuvor genannten Komponenten an die Polyesteroberfläche verbessern, werden bevorzugt in Form einer wässrigen Lösung oder Dispersion eingesetzt. Die Konzentration in der fertigen Beschichtungslösung beträgt bevorzugt 0,3 bis 4 Gew.-%, insbesondere 0,5 bis 3,5 Gew.-%. Geeignete Polymere dieser Art sind z. B. Acrylate wie sie bspw. beschrieben sind in der WO 94/13476, Polyurethane, Butadiencopolymere mit Acrylnitril oder Methylmethacrylat, Methacrylsäure oder deren Ester.

Die Acrylate bestehen bevorzugt aus einem Ester der Methacrylsäure, insbesondere einem Alkylester, dessen Alkylgruppe bis zu zehn C-Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zur Polyesterfolie. Zudem werden bevorzugt geeignete Comonomere eingesetzt wie z. B. N-Methylolacrylamid, N-Methylolmethacrylamid und die entsprechenden Ether; Carboxylgruppen enthaltende Monomere wie z. B. Crotonsäure, Itaconsäure, Maleinsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat und Amide wie z. B. Acrylamid, Methacrylamid oder Maleinsäureamid. Mit solchen Acrylatkopolymeren ergibt sich eine besonders gute Haftung zwischen der Polyesterfolie und der erfindungsgemäßen Beschichtung.

Optional kann die Beschichtung Antiblockmittel enthalten. Übliche Antiblockmittel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Titandioxid, Kaolin oder vernetzte Polystyrol- oder Arcrylat-Partikel. Bevorzugt wird poröses SiO₂ wie amorphe Kieselsäure, da damit die Wasserverteilung auf der Oberfläche der Folie gefördert wird.

Damit besteht die fertige Beschichtungsmischung, -lösung oder -dispersion bevorzugt nur aus Wasser und den Komponenten a) und b) bzw. a), b) und c) sowie ggf. Antiblockmitteln. "Bestehen" bedeutet hier, dass die Zusammensetzung zu mindestens 90 Gew.-%, bevorzugt mindestens 95 Gew.-% und besonders bevorzugt zu mindestens 99 Gew.-% aus den genannten Komponenten besteht.

Nach der In-line-Beschichtung besteht die Beschichtung aus dem getrockneten Rückstand (Trocknungsprodukt) der Beschichtungszusammensetzung, die dann ebenso bevorzugt nur aus dem Trocknungsprodukt der Komponenten a) und b) bzw. a), b) und c) sowie ggf. Antiblockmitteln besteht.

Die fertige Beschichtungszusammensetzung (z. B. wässrige Dispersion) ist ebenfalls Gegenstand der vorliegenden Erfindung.

Die erfindungsgemäße biaxial orientierte Polyesterfolie wird bevorzugt in-line beschichtet, d. h. die Beschichtung wird während des Folienherstellprozesses vor der Längs- und/oder Querstreckung aufgebracht. Um eine gute Benetzung der Polyesterfolie mit der wässrigen Beschichtungszusammensetzung zu erreichen, wird die Oberfläche bevorzugt zunächst coronabehandelt. Die Beschichtung kann mit einem gängigen geeigneten Verfahren wie mit einem Schlitzgießer oder einem Sprühverfahren aufgetragen werden. Besonders bevorzugt ist die Aufbringung der Beschichtung mittels des "Reverse gravure-roll coating"-Verfahrens, bei dem sich die Beschichtung äußerst homogen mit Antragsgewichten zwischen 1,0 und 3,0 g/m² auftragen lässt. Ebenfalls bevorzugt ist die Auftragung durch das Meyer-Rod-Verfahren, mit dem sich größere Beschichtungsstärken erzielen lassen. Die Beschichtung auf der fertigen Folie weist eine Dicke von 5 bis 200 nm, auf.

Die Beschichtungskomponenten können während der Trocknung und Verstreckung der Polyesterfolie und besonders bei der anschließenden Wärmebehandlung, die bis zu 240 °C erreichen kann, miteinander reagieren. Das Reaktionsprodukt liefert speziell auf einer biaxial verstreckten Polyesterfolie einen guten Antibeschlageffekt und eine hohe Hydrophilie.

Die erfindungsgemäße Polyesterfolie kann sowohl einschichtig aufgebaut sein, zweischichtig aus einer Basisschicht (B) und einer Deckschicht (A) als auch dreischichtig aus einer Basisschicht (B) und zwei Deckschichten (A) und (C), die gleich oder verschieden sein können.

Die Gesamtdicke der Polyesterfolie liegt üblicherweise im Bereich von 5 bis 500 µm, vorzugsweise von 10 bis 350 µm.

Die Polyesterfolie kann auf einer oder beiden Oberflächen erfindungsgemäß beschichtet sein.

Die Polyesterfolie kann transparent, weiß, opak, glänzend oder matt sein. Diese verschiedenen optischen Eigenschaften erreicht man beispielsweise durch die Zugabe von unterschiedlichen Mengen an Additiven wie Calciumcarbonat, amorpher Kieselsäure oder Titandioxid. Diese Additive können sowohl in der Basisschicht als auch in den eventuell vorhandenen Deckschichten enthalten sein.

Weiterhin kann die Polyesterfolie siegelfähig und peelfähig sein. Dies wird gewöhnlich durch Verwendung von Polyestern mit niedriger Glasübergangstemperatur oder von anderen siegelfähigen Polymeren in mindestens einer Deckschicht erreicht. Bei solchen Folien wird bevorzugt die Siegelschicht hydrophil beschichtet.

Die Polyesterfolie ist hauptsächlich aus thermoplastischem Polyester aufgebaut. Solche Polyester sind im "Handbook of Thermoplastic Polyesters, Ed. S. Fakirov, Wiley-VCH, 2002" genannt. Beispiele sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN) sowie aus 1,4-Bis-hydroxymethyl-cyclohexan und Terephthalsäure [= Poly(1,4-cyclohexandimethylenterephthalat), PCDT]. Besonders bevorzugt ist PET.

Das Herstellungsverfahren für Polyesterfolien wird z. B. beschrieben im "Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988". Bei dem bevorzugtem Extrusionsverfahren zur Herstellung der Folie wird das aufgeschmolzene Polymermaterial gegebenenfalls mit den Additiven durch eine Schlitzdüse extrudiert und als weitgehend amorphe Vorfolie auf einer Kühlwalze abgeschreckt. Diese Folie wird anschließend erneut erhitzt und in mindestens einer Richtung - entweder in Maschinenrichtung (MD) oder in Querrichtung (TD) -, bevorzugt aber in Längs- und Querrichtung bzw. in Quer- und Längsrichtung bzw. in Längs-, in Quer- und nochmals in Längsrichtung und/oder Querrichtung verstreckt ("orientiert"). Die Folientemperaturen im Streckprozess liegen im allgemeinen 10 bis 60 °C über der Glasübergangstemperatur Tg des verwendeten Polyesters, das Streckverhältnis der Längsstreckung liegt üblicherweise bei 2,0 bis 6,0, insbesondere bei 3,0 bis 4,5, das der Querstreckung bei 2,0 bis 5,0, insbesondere bei 3,0 bis 4,5, und das der gegebenenfalls durchgeführten zweiten Längs- und Querstreckung bei 1,1 bis 5,0. Die Längsstreckung kann auch gleichzeitig mit der Querstreckung (Simultanstreckung) oder in jeder denkbaren Sequenzfolge durchgeführt werden. Es folgt die Thermofixierung der Folie bei Ofentemperaturen von 180 bis 260 °C, insbesondere von 220 bis 250 °C. Anschließend wird die Folie abgekühlt und gewickelt.

Die nachstehende Tabelle fasst die wichtigsten bevorzugten Eigenschaften der Beschichtung noch einmal zusammen.

**Tabelle**

| Beschichtungskomponenten | bevorzugt | besonders bevorzugt | Einheit |
|---|---|---|---|
| Sulfopolyester, Anteil | 0,1 bis 2,5 | 0,3 bis 2,0 | Gew.-% |
| Tensid, Anteil | 0,1 bis 2,5 | 0,3 bis 2,0 | Gew.-% |
| optionales Polymer, Anteil | 0,3 bis 4,0 | 0,5 bis 3,5 | Gew.-% |
| Dicke der Beschichtung | 5 bis 200 | 30 bis 200 | nm |

Die Angaben beziehen sich auf die gebrauchsfertige wässrige Beschichtungszusammensetzung (wässrige Beschichtungsdispersion).

Die erfindungsgemäße Beschichtungszusammensetzung eignet sich für die Beschichtung von polymeren Oberflächen, wie z. B. Polymerfolien, insbesondere Polyesterfolien, polymeren Brillengläsern oder medizinischen Diagnosemitteln. Beschichte Polymer- oder Polyesterfolien eignen sich durch ihre Antibeschlag-Eigenschaften z. B. als Verpackungsmaterial für Lebens- und Genussmittel.

Um die Wirksamkeit der Beschichtungen zu testen, wurden Polyesterfolien beschichtet und diese mit den folgenden Messmethoden charakterisiert:

### Messung des Kontaktwinkels

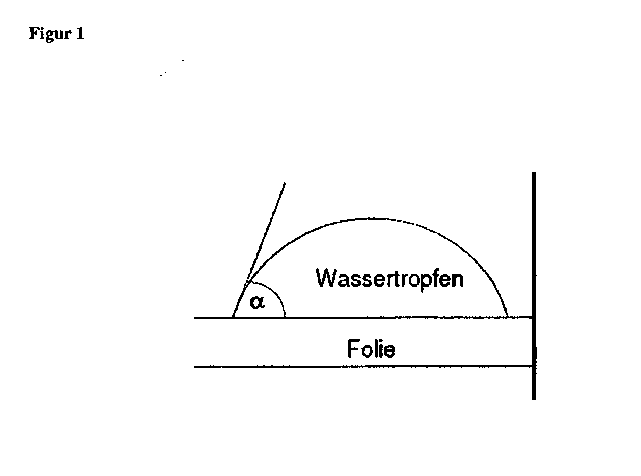

Der Kontaktwinkel α gegenüber Wasser (siehe Figur 1) wurde gemessen und als Maß für die Hydrophilie der Folienoberfläche benutzt. Je kleiner der Kontaktwinkel desto größer ist die Hydrophilie. Die Messung wurde durchgeführt an einem Goniometer G1 der Firma Krüss, Hamburg, DE.

### Bestimmung der Antibeschlag-Wirkung

Die Antibeschlag-Eigenschaften der Polyesterfolien wurden wie folgt bestimmt:

In einem auf 23 °C und 50 % relative Luftfeuchtigkeit temperierten Labor wurden Folienmuster auf eine Menüschale (Länge ca. 17 cm, Breite ca. 12 cm, Höhe ca. 3 cm) aus amorphem Polyethylenterephthalat, die ca. 50 ml Wasser enthielt, geschweißt.

Die Schalen werden in einem auf 4 °C temperierten Kühlschrank gelagert und nach jeweils 10 min, 30 min, 4 h, 8 h und 24 h zur Beurteilung entnommen. Die Kondensatbildung beim Abkühlen der 23 °C warmen Luft auf Kühlschranktemperatur wurde geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Dazu wird ein 250 ml Becherglas, das 50 ml Wasser enthält und mit der zu prüfenden Folie bespannt ist, in ein auf 70 °C temperiertes Wasserbad gestellt. Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen und die Antibeschlag-Wirkung lässt nach. Diese Untersuchung wurde ebenfalls in einem auf 23 °C und 50 % relative Luftfeuchtigkeit temperierten Labor durchgeführt.

### Messung der Transparenz und Trübung

Die Messung an den beschichteten Polyesterfolien erfolgt am Hazegard Hazemeter XL-211 der Fa. BYK Gardner in Anlehnung an ASTM-D 1033-77 für die Transparenz und an ASTM-D 1003-61 für die Trübung.

Im Folgenden wird die Erfindung anhand von Beispielen näher erläutert.

### Beispiel 1

Zur Herstellung der Beschichtungslösung wurden folgende Komponenten in Wasser gelöst:
- 1,5 Gew.-% Sulfopolyester (Copolyester aus 90 Mol-% Isophthalsäure und 10 Mol-% Natriumsulfoisophthalsäure und Ethylenglykol),
- 1,5 Gew.-% Diethylhexylsulfosuccinat-Natriumsalz (®Lutensit A-BO, BASF AG) als Tensid
Die Gew.-%-Angaben beziehen sich auf die fertige Beschichtungslösung.

Diese Beschichtungslösung wurde nach dem folgenden Verfahren auf die Polyesterfolie aufgebracht:

Aus Polyethylenterephthalat wurde eine Schmelze hergestellt und diese durch eine Breitschlitzdüse auf eine auf etwa 20 °C gehaltene Gießwalze extrudiert, wo sie zu einer unorientierten Folie erstarrte. Die unorientierte Folie wurde im Streckverhältnis von 3,8:1 längsgestreckt, wobei sie auf einer Temperatur von 115 °C gehalten wurde. Die längsgestreckte Folie wurde in einem Coronaentladegerät coronabehandelt und danach durch Reversgravurbeschichtung mit der oben beschriebenen Lösung aus Sulfopolyester und Diethylhexylsulfosuccinat-Natriumsalz beschichtet. Die längsgestreckte, coronabehandelte Folie wurde bei einer Temperatur von 100 °C getrocknet. Danach wurde die Folie im Streckverhältnis 3,8:1 quergestreckt, so dass man eine biaxial gestreckte Folie erhielt. Die biaxial gestreckte Folie wurde bei 230 °C thermofixiert. Die Endfoliendicke war 25 µm. Das Trockengewicht der Beschichtung betrug ca. 0,04 g/m².

Die Folie zeigte sehr gute Antibeschlag-Eigenschaften, d. h. die Bildung feiner Tröpfchen wurde nicht beobachtet. Der gemessene Kontaktwinkel betrug 12° im Vergleich zu einer unbeschichteten Folie mit einem Winkel von 64°. Die Transparenz und die Trübung der Folie blieben beim Antibeschlag-Test unverändert.

### Beispiel 2

Analog Beispiel 1 wurde folgende Zusammensetzung der Beschichtungslösung verwendet:
- 1,0 Gew.-% Sulfopolyester (Copolyester aus 90 Mol-% Isophthalsäure und 10 Mol-% Natriumsulfoisophthalsäure und Ethylenglykol),
- 1,0 Gew.-% Acrylat-Copolymer, bestehend aus 60 Gew.-% Methylmethacrylat, 35 Gew.-% Ethylacrylat und 5 Gew.-% N-Methylolacrylamid,
- 1,5 Gew.-% Diethylhexylsulfosuccinat-Natriumsalz (Lutensit A-BO, BASF AG)

Das Trockengewicht der Beschichtung betrug ca. 0,04 g/m² bei einer Dicke der Trägerfolie von ca. 50 µm.

Wie Beispiel 1 zeigte auch diese Folie sehr gute Antibeschlag-Eigenschaften, gleichzeitig war die Abwaschbeständigkeit der Beschichtung verbessert, d. h. die Antibeschlag-Eigenschaften blieben auch nach mehreren Stunden Behandlung mit Dampf noch erhalten. Der gemessene Randwinkel betrug 13°. Die Transparenz und die Trübung der Folie blieben beim Antibeschlag-Test unverändert.

### Vergleichsbeispiel

Analog Beispiel 1 wurde eine biaxial orientierte Polyesterfolie hergestellt, allerdings ohne Beschichtung.

Beim Antibeschlag-Test zeigte die Folie starke Tröpfchenbildung, d. h. die Folie hatte keinen Antibeschlag-Effekt. Der gemessene Randwinkel betrug 64°.

## Patentansprüche

1. Polyesterfolie, welche auf mindestens einer Oberfläche hydrophil beschichtet ist, wobei die hydrophile Beschichtung das Trocknungsprodukt einer Beschichtungszusammensetzung ist, die Wasser, einen Sulfopolyester und ein anionisches Tensid enthält, und die Beschichtung eine Dicke von 5 bis 200 nm hat.

2. Polyesterfolie nach Anspruch 1, **dadurch gekennzeichnet, dass** die BeschichtungsZusammensetzung zusätzlich ein haftvermittelndes Polymer enthält.

3. Polyesterfolie nach Anspruch 1 oder 2, **dadurch gekennzeichnet, dass** der Sulfopolyester aus dem Kondensationsprodukt der folgenden Monomeren oder deren zur Bildung von Polyestern befähigten Derivaten besteht:
A) bis zu 95 Mol.-% Isophthalsäure,
B) 5 bis 20 Mol-% wenigstens eines Sulfomonomeren enthaltend eine Alkalimetallsulfonatgruppe an dem aromatischen Teil einer aromatischen Dicarbonsäure und
C) die zur Bildung von 100 Mol-% Kondensat notwendige stöchiometrische Menge wenigstens eines copolymerisierbaren aliphatischen oder cycloaliphatischen Glykols mit 2 bis 11 Kohlenstoffatomen.

4. Polyesterfolie nach Anspruch 3, **dadurch gekennzeichnet, dass** das Sulfomonomere Natrium-sulfoterephthalsäure oder Natrium-5-sulfoisophthalsäure ist.

5. Polyesterfolie nach Anspruch 3 oder 4, **dadurch gekennzeichnet, dass** das copolymerisierbare Glykol Ethylenglykol ist.

6. Polyesterfolie nach einem oder mehreren der Ansprüche 3 bis 5, **dadurch gekennzeichnet, dass** der Sulfopolyester 6,5 bis 12 Mol-% wenigstens eines Sulfomonomeren enthält.

7. Polyesterfolie nach einem oder mehreren der Ansprüche 1 bis 6, **dadurch gekennzeichnet, dass** das Tensid ein Alkylsulfat, Alkylbenzolsulfat, Alkylethersulfat oder ein Sulfobernsteinsäureester ist.

8. Polyesterfolie nach einem oder mehreren der Ansprüche 1 bis 7, **dadurch gekennzeichnet, dass** die Beschichtungszusammensetzung das Tensid zu 0,1 bis 2,5 Gew,-% enthält.

9. Polyesterfolie nach einem oder mehreren der Ansprüche 1 bis 8, **dadurch gekennzeichnet, dass** das haftvermittelnde Polymer ein Acrylat, Polyurethan, Butadiencopolymer mit Acrylnitril oder Methylmethacrylat, Methacrylsäure oder deren Ester ist.

10. Polyesterfolie nach einem oder mehreren der Ansprüche 1 bis 9, **dadurch gekennzeichnet, dass** das haftvermittelnde Polymer einen C₁-C₁₀-Alkylester der Methacrylsäure enthält.

11. Polyesterfolie nach einem oder mehreren der Ansprüche 1 bis 10, **dadurch gekennzeichnet, dass** die Beschichtungszusammensetzung das haftvermittelnde Polymer zu 0,3 bis 4 Gew.-% enthält.

12. Polyesterfolie nach einem oder mehreren der Ansprüche 1 bis 11, **dadurch gekennzeichnet, dass** die Beschichtungszusammensetzung Antiblockmittel enthält.

13. Polyesterfolie nach einem oder mehreren der Ansprüche 1 bis 12, **dadurch gekennzeichnet, dass** die Folie einschichtig ist.

14. Polyesterfolie nach einem oder mehreren der Ansprüche 1 bis 13, **dadurch gekennzeichnet, dass** die Folie einen A-B-C-Schichtaufbau hat, wobei B die Basisschicht ist und A und C Deckschichten sind, die gleich oder verschieden sein können:

15. Polyesterfolie nach einem oder mehreren der Ansprüche 1 bis 14, **dadurch gekennzeichnet, dass** sie als Polyester Polyethylenterephthalat enthält.

16. Verfahren zur Herstellung einer Polyesterfolie gemäß einem oder mehreren der Ansprüche 1 bis 15, umfassend die Schritte
a) Herstellen einer Folie durch Extrusion oder Coextrusion,
b) Strecken der Folie,
c) Beschichten der Folie mit einer Beschichtungszusammensetzung, die Wasser, einen Sulfopolyester und ein anionisches Tensid enthält, und d) Thermofixieren der gestreckten und beschichteten Folie,
wobei die Beschichtung auf der fertigen Folie eine Dicke von 5 bis 200 nm hat.

17. Verfahren nach Anspruch 16, **dadurch gekennzeichnet, dass** die zur beschichtende Oberfläche der Folie vor der Beschichtung coronabehandelt wird.

18. Verfahren nach Anspruch 16 oder 17, **dadurch gekennzeichnet, dass** die Beschichtung in-line nach dem reverse gravure-roll coating"-Verfahren aufgebracht wird.

19. Verwendung einer Polyesterfolie nach einem oder mehreren der Ansprüche 1 bis 15 als Verpackungsmaterial für Lebens- und Genussmittel.

## Claims

1. A polyester foil which has a hydrophilic coating on at least one surface, where the hydrophilic coating comprises the product of drying of a coating composition in which water, a sulfopolyester, and an anionic surfactant are present, and the thickness of the coating is from 5 to 200 nm.

2. The polyester foil as claimed in claim 1, wherein the coating composition also comprises an adhesion-promoting polymer.

3. The polyester foil as claimed in claim 1 or 2, wherein the sulfopolyester is composed of the condensate of the following monomers or their derivatives capable of forming polyesters
A) up to 95 mol% of isophthalic acid,
B) from 5 to 20 mol% of at least one sulfomonomer containing an alkali metal sulfonate group on the aromatic moiety of an aromatic dicarboxylic acid, and
C) the necessary stoichiometric amount of at least one copolymerizable aliphatic or cycloaliphatic glycol having from 2 to 11 carbon atoms to form 100 mol% of condensate.

4. The polyester foil as claimed in claim 3, wherein the sulfomonomer is the sodium salt of sulfoterephthalic acid or the sodium salt of 5-sulfoisophthalic acid.

5. The polyester foil as claimed in claim 3 or 4, wherein the copolymerizable glycol is ethylene glycol.

6. The polyester foil as claimed in one or more of claims 3 to 5, wherein the sulfopolyester contains from 6.5 to 12 mol% of at least one sulfomonomer.

7. The polyester foil as claimed in one or more of claims 1 to 6, wherein the surfactant is an alkyl sulfate, alkyl benzene sulfate, alkyl ether sulfate, or a sulfosuccinic ester.

8. The polyester foil as claimed in one or more of claims 1 to 7, wherein the amount of the surfactant present in the coating composition is from 0.1 to 2.5 % by weight.

9. The polyester foil as claimed in one or more of claims 1 to 8, wherein the adhesion-promoting polymer is an acrylate, polyurethane, butadiene copolymer with acrylonitrile or methyl methacrylate, methacrylic acid, or ester thereof.

10. The polyester foil as claimed in one or more of claims 1 to 9, wherein the adhesion-promoting polymer comprises a C₁-C₁₀-alkyl ester of methacrylic acid.

11. The polyester foil as claimed in one or more of claims 1 to 10, wherein the amount of the adhesion-promoting polymer present in the coating composition is from 0.3 to 4 % by weight.

12. The polyester foil as claimed in one or more of claims 1 to 11, wherein the coating composition comprises antiblocking agent.

13. The polyester foil as claimed in one or more of claims 1 to 12, wherein the foil has one layer.

14. The polyester foil as claimed in one or more of claims 1 to 13, wherein the layer structure of the foil is A-B-C, where B is the base layer and A and C are outer layers which can be identical or different.

15. The polyester foil as claimed in one or more of claims 1 to 14, which comprises polyethylene terephthalate as polyester.

16. A process for production of the polyester foil as claimed in one or more of claims 1 to 15, encompassing the steps of
a) production of a foil via extrusion or coextrusion,
b) stretching of the foil,
c) coating of the foil with a coating composition in which water, a sulfopolyester, and an anionic surfactant are present, and
d) heat-setting of the stretched and coated foil, where the thickness of the coating on the finished foil is from 5 to 200 nm.

17. The process as claimed in claim 16, wherein the surface to be coated of the foil is corona-treated prior to the coating process.

18. The process as claimed in claim 16 or 17, wherein the coating is applied in-line by the reverse gravure-roll coating process.

19. The use of the polyester foil as claimed in one or more of claims 1 to 15 as packaging material for foods and for other consumable items.

## Revendications

1. Feuille de polyester qui présente un revêtement hydrophile sur au moins une surface, dans laquelle le revêtement hydrophile est le produit de séchage d'une composition de revêtement, qui contient de l'eau, un sulfopolyester et un tensioactif anionique, et le revêtement a une épaisseur de 5 à 200 nm.

2. Feuille de polyester selon la revendication 1, **caractérisée en ce que** la composition de revêtement contient en outre un polymère adhésif.

3. Feuille de polyester selon la revendication 1 ou 2, **caractérisée en ce que** le sulfopolyester est constitué d'un produit de condensation des monomères suivants, ou de leurs dérivés capables de former des polyesters :
A) jusqu'à 95 % en mole d'acide isophtalique,
B) 5 à 20 % en mole d'au moins un sulfomonomère contenant un groupement sulfonate de métal alcalin sur la partie aromatique d'un acide dicarboxylique aromatique, et
C) la quantité stoechiométrique nécessaire pour la formation de 100 % en mole de condensat d'au moins un glycol aliphatique ou cycloaliphatique copolymérisable ayant 2 à 11 atomes de carbone.

4. Feuille de polyester selon la revendication 3, **caractérisée en ce que** le sulfomonomère est l'acide sulfotéréphtalique de sodium ou l'acide 5-sulfo-isophtalique de sodium.

5. Feuille de polyester selon la revendication 3 ou 4, **caractérisée en ce que** le glycol copolymérisable est l'éthylèneglycol.

6. Feuille de polyester selon l'une quelconque ou plusieurs des revendications 3 à 5, **caractérisée en ce que** le sulfopolyester contient 6,5 à 12 % en mole d'au moins un sulfomonomère.

7. Feuille de polyester selon l'une quelconque ou plusieurs des revendications 1 à 6, **caractérisée en ce que** le tensioactif est un alkylsulfate, un alkylbenzènesulfate, un alkyléthersulfate ou un ester de l'acide sulfosuccinique.

8. Feuille de polyester selon l'une quelconque ou plusieurs des revendications 1 à 7, **caractérisée en ce que** la composition de revêtement contient le tensioactif à hauteur de 0,1 à 2,5 % en poids.

9. Feuille de polyester selon l'une quelconque ou plusieurs des revendications 1 à 8, **caractérisée en ce que** le polymère adhésif est un acrylate, le polyuréthanne, un copolymère de butadiène avec l'acrylonitrile ou le méthacrylate de méthyle, l'acide méthacrylique ou leurs esters.

10. Feuille de polyester selon l'une quelconque ou plusieurs des revendications 1 à 9, **caractérisée en ce que** le polymère adhésif contient un ester d'alkyle en C₁-C₁₀ de l'acide méthacrylique.

11. Feuille de polyester selon l'une quelconque ou plusieurs des revendications 1 à 10, **caractérisée en ce que** la composition de revêtement contient le polymère adhésif à hauteur de 0,3 à 4 % en poids.

12. Feuille de polyester selon l'une quelconque ou plusieurs des revendications 1 à 11, **caractérisée en**
**ce que** la composition de revêtement contient un agent anti-bloquant.

13. Feuille de polyester selon l'une quelconque ou plusieurs des revendications 1 à 12, **caractérisée en ce que** la feuille présente une couche unique.

14. Feuille de polyester selon l'une quelconque ou plusieurs des revendications 1 à 13, **caractérisée en ce que** la feuille a une structure stratifiée de type A-B-C, dans laquelle B est la couche de base et A et C sont des couches de recouvrement, qui peuvent être identiques ou différentes.

15. Feuille de polyester selon l'une quelconque ou plusieurs des revendications 1 à 14, **caractérisée en ce qu'**elle contient, comme polyester, un poly(téréphtalate d'éthylène).

16. Procédé de fabrication d'une feuille de polyester selon l'une quelconque ou plusieurs des revendications 1 à 15, comprenant les étapes consistant à :
a) fabriquer une feuille par extrusion ou par co-extrusion,
b) étirer la feuille,
c) revêtir la feuille d'une composition de revêtement, qui contient de l'eau, un sulfopolyester et un tensioactif anionique, et
d) procéder à une thermofixation de la feuille étirée et revêtue,
dans lequel le revêtement sur la feuille finie a une épaisseur de 5 à 200 nm.

17. Procédé selon la revendication 16, **caractérisé en ce que** la surface de la feuille que l'on souhaite revêtir est soumise à un traitement corona avant le revêtement.

18. Procédé selon la revendication 16 ou 17, **caractérisé en ce que** le revêtement est appliqué en ligne selon le procédé de revêtement au rouleau à gravure inversée ("reverse gravure-roll coating").

19. Utilisation d'une feuille de polyester selon l'une quelconque ou plusieurs des revendications 1 à 15, comme matériau d'emballage pour les produits alimentaires et les produits de luxe.
